(19) Europäisches Patentamt
European Patent Office
Office européen des brevets

(11) **EP 1 354 614 B1**

(12) **EUROPÄISCHE PATENTSCHRIFT**

(45) Veröffentlichungstag und Bekanntmachung des Hinweises auf die Patenterteilung:
**24.08.2005 Patentblatt 2005/34**

(51) Int Cl.⁷: **B01D 21/24**, B01D 17/02

(21) Anmeldenummer: **02022051.3**

(22) Anmeldetag: **02.10.2002**

(54) **Absetzbecken**

Settling tank

Bassin de sédimentation

(84) Benannte Vertragsstaaten:
**AT BE BG CH CY CZ DE DK EE ES FI FR GB GR IE IT LI LU MC NL PT SE SK TR**
Benannte Erstreckungsstaaten:
**LT LV RO**

(30) Priorität: **04.04.2002 DE 10214963**

(43) Veröffentlichungstag der Anmeldung:
**22.10.2003 Patentblatt 2003/43**

(73) Patentinhaber: **hydrograv GmbH 01097 Dresden (DE)**

(72) Erfinder: **Armbruster, Martin 76131 Karlsruhe (DE)**

(74) Vertreter: **Durm, Frank et al Durm & Durm Patentanwälte Moltkestrasse 45 76133 Karlsruhe (DE)**

(56) Entgegenhaltungen:
**EP-A- 0 923 971        DE-A- 4 431 369
DE-A- 19 852 204        DE-B- 1 045 931
GB-A- 867 948**

• **PATENT ABSTRACTS OF JAPAN vol. 008, no. 077 (C-218), 10. April 1984 (1984-04-10) & JP 59 004407 A (MITSUBISHI JUKOGYO KK), 11. Januar 1984 (1984-01-11)**
• **PATENT ABSTRACTS OF JAPAN vol. 2000, no. 14, 5. März 2001 (2001-03-05) & JP 2000 325706 A (NISSHIN STEEL CO LTD;KURITA WATER IND LTD), 28. November 2000 (2000-11-28)**

**Beschreibung**

Die Erfindung betrifft ein Absetzbecken für eine zweiphasige Suspension, insbesondere für Klärschlamm, in dem sich durch gravitative Trennung die dichtere und damit schwerere Phase nach unten absetzt, wodurch sich ein Trennspiegel zwischen der schweren und der leichten Phase bildet.

Gravitative Absetzbecken werden heute weltweit als Standardbauwerke der Fest/Flüssigtrennung in biologischen Reinigungsstufen von Kläranlagen eingesetzt. Trotz Jahrzehnte langer Forschungsarbeit auf diesem Gebiet funktionieren diese Bauwerke nicht optimal. Ihre Abtrennleistung ist unbefriedigend in Bezug auf den Raum, der ihnen hierzu zur Verfügung steht. Auch die Ablaufwerte der zu klärenden leichteren Phase sind häufig nicht befriedigend. Dies ist insbesondere dann der Fall, wenn der Einlauf über dem Trennspiegel liegt. Als Trennspiegel wird die Höhenlage bezeichnet, ab der die Konzentration im Absetzbecken vom Überstand leichterer Phase aus betrachtet mit einem hohen Gradienten zur schwereren Phase steigt. Als Ablaufwert oder Ablaufqualität bezeichnet man die Restmenge abzutrennender schwerer Phase im Ablauf der zu klärenden leichten Phase oder umgekehrt. Wegen der bekannten Probleme mit Absetzbecken gibt es zahlreiche Veröffentlichungen, die sich mit einer Optimierung dieser Bauwerke beschäftigen. Dabei wird immer wieder auf den dominanten Einfluss des Einlaufbauwerks verwiesen.

Den Gesetzen der Physik der Dichteströmungen folgend saugen Dichteströmungen über ihre Ränder Flüssigkeit aus ihrer Umgebung ein. Das Maß, in dem dieses Einsaugen stattfindet, hängt direkt davon ab, wie hoch die Gesamtenergie ist, die die Strömung an ihrem Eintritt in ein Umgebungsfluid hat. Dieses Einsaugen von Umgebungsfluid, das den transportierten Volumen- und Massenstrom in der Dichteströmung erhöht, nennt man Strahleinmischung, Einmischung oder englisch Entrainment. Ein Volumenstrom $Q$ wächst durch Einmischung auf seinem Strömungsweg vom Einlaufvolumenstrom $Q_i$ auf einen erhöhten Volumenstrom $Q = Q_i + \Delta Q$ an. Da Absetzbecken ihre Funktion um so effizienter erfüllen, je kleiner $Q$ ist, erhöht jede Maßnahme, die die Energie der einströmenden Suspension am Einlauf reduziert, die Effizienz des Absetzbeckens.

Das Einmischverhalten einer Dichteströmung kann man technisch nur über ein begrenztes Gebiet, das so genannte Nahfeld des technischen Bauwerks beeinflussen; im Fernfeld des Bauwerks ergibt sich die Einmischung aus den örtlich vorliegenden physikalischen Parametern der Dichtedifferenz der lokalen Dichte $\rho_1$ zur Dichte der Umgebung $\rho_a$, dem örtlichen Druckgradienten, der Mächtigkeit $h_D$ der Dichteströmung und folglich ihrer örtlichen Fließgeschwindigkeit.

Die an einem Einlauf anliegende Gesamtenergie kann als Summe ihrer einzelnen Anteile geschrieben werden:

$$E_{tot} = (E_{pk})_{min} + E_b + \Delta E_{pk} + \Delta E_U$$

Die durchströmte Einlauffläche $A_i$ eines Einlaufbauwerks kann bei einer über die Einlaufbreite $b_i$ gleich bleibenden Einlaufhöhe $h_i$ berechnet werden zu $A_i = h_i \cdot b_i$. Der Volumenstrom pro Einlaufbreite ergibt sich zu $q_i = Q_i/b_i$, die mittlere Einlaufgeschwindigkeit zu $U_i = q_i/h_i$.

Ist die örtliche Energie $E_{tot} = (E_{pk})_{min} + \Delta E$ um einen Energieüberschuss $\Delta E = E_b + \Delta E_{pk} + \Delta E_U$ höher als die minimal erforderliche Energie $(E_{pk})_{min}$, um eine Dichteströmung mit gegebenem Volumenstrom $Q$ zu bewegen, führt dies zu Einmischung. $(E_{pk})_{min}$ stellt sich für Absetzbecken nach dem physikalischen Gesetz der kleinsten Energie ein, wenn die densimetrische Froudezahl $Fr_D = U_i/(g' \cdot h_i)^{1/2} = 1$ bei gleichzeitig breitest möglichem Einlauf ist und der Einlauf auf Trennspiegelhöhe liegt. Die lokal tatsächlich wirksame Gravitationskonstante $g'$ ergibt sich aus der Differenz der lokalen Dichte $\rho_1$ zur Umgebungsdichte $\rho_a$ zu $g' = (\rho_1 - \rho_a) / \rho_a \cdot g$.

$E_b$ ist der Betrag, um den sich der Energieüberschuss $\Delta E$ am Einlauf erhöht, falls nicht in Höhe des Trennspiegels eingeleitet wird:

Wird eine Suspension der Dichte $\rho_S$ unterhalb des sich in Höhenlage $h_S$ befindlichen Trennspiegels in einer vertikalen Entfernung $h_0$ zum Punkt gleicher Dichte der Umgebungsphase in eine Umgebungsphase höherer Dichte eingeleitet, hat sie aufgrund ihrer geringeren Dichte Auftriebsenergie $E_b$ und wird folglich aus der Horizontalen mit dem Winkel $\Phi$ nach oben umgelenkt. Je tiefer die Einleitung unterhalb des Trennspiegels liegt, je größer also ihr Abstand $h_0$ zum Trennspiegel in Höhe $h_S$ ist, um so größer ist die Auftriebsenergie $E_b$ und folglich die Einmischungsrate. Aus diesen Betrachtungen folgt aus energetischer Sicht die Forderung, den Einlauf in ein Absetzbecken so auszugestalten, dass die Auftriebsenergie für schwankende Höhenlagen $h_s$ des Trennspiegels durch Adaption der relativen Höhenlage $h_0$ der Einlauffläche knapp unter dem Trennspiegel mit $h_0 = 0$ und somit $E_b \approx 0$ minimiert wird.

$\Delta E_{pk}$ ist der Betrag, um den sich der Energieüberschuss $\Delta E$ am Einlauf erhöht, falls nicht das optimale Verhältnis aus kinetischer und potentieller Energie mit $Fr_D = 1$ gegeben ist. Die energetisch optimale Einlaufhöhe $h_i$ ergibt sich mit $Fr_D = 1$ zu $h_i = (q_i^2/g')^{1/3}$. Die Froudezahl ist für veränderliche Einlaufbedingungen somit beherrschbar durch Adaption der Höhe $h_i$ des Einlaufs.

$\Delta E_U$ ist der Betrag, um den sich der Energieüberschuss $\Delta E$ am Einlauf erhöht, falls die Breite $b_i$ des Einlaufs kleiner als die maximal mögliche Breite ist. Die maximal mögliche Breite ergibt sich aus geometrischer Betrachtung mit dem technischen Merkmal eines um die Peripherie umlaufend angeordneten Einlaufs.

Einen positiven Effekt auf die Ablaufwerte eines Absetzbeckens kann die Strahleinmischung dann haben, wenn sie am Einlauf der Suspension dafür sorgt, dass sich die einlaufende Suspension in begrenztem Maße mit Suspension höherer

Dichte aus dem Absetzbecken anreichert und somit die größeren Flocken der Umgebungssuspension kleinere Partikel der Zulaufsuspension zurückhalten können und damit eine so genannte Flockenfilterwirkung auftritt. Flockenfilterwirkung ist ein erwünschter Prozess, der zum Beispiel in Bemessungsregeln für Nachklärbecken gefordert wird.

Strömungen in Absetzbecken sind nach ihrer Strömungsrichtung zu unterscheiden in Quellen- oder Senkenströmungen. Bei Quellenströmungen wird das Fluid auf der Fließstrecke durch ständig wachsenden Druck kontinuierlich verzögert, bei Senkenströmungen durch ständig sinkenden Druck kontinuierlich beschleunigt. Eine Senkenströmung verläuft erheblich stabiler und folglich deutlich unempfindlicher bezüglich Störungen. Störungen werden in Absetzbecken verursacht durch zeitlich veränderliche Fließgeschwindigkeiten $U_i$ am Einlauf. Diese prägen dem dichtegeschichteten Flüssigkeitskörper Impulskräfte auf, die proportional zur Geschwindigkeit $U_i$ sind. Bei zentrischem Einlauf ist $U_i$ sehr groß und die somit großen destabilisierenden Störungen werden einer ohnehin instabilen Strömung überlagert. Bei peripherem Einlauf ist die Geschwindigkeit $U_i$ deutlich kleiner und somit die Impulskraft drastisch reduziert und wird zudem unkritisch einer stabilen Strömung überlagert.

Das Phänomen, dass die Strahleinmischung mit kleiner werdendem $h_0$ und somit kleiner werdender Auftriebsenergie $E_b$ sinkt, macht sich das in der Patentschrift DE 197 58 360 C2 und der zugehörigen Offenlegungsschrift EP 0 923 971 A1 beschriebene Verfahren zu Nutze, indem es $h_0$ an einem zentrischen Einlaufbauwerk für runde Absetzbecken in Stufen minimiert. Eine Minimierung von $\Delta E_{pk}$ und $\Delta E_U$ wird hier nicht berücksichtigt. Das Phänomen der Einmischung kann damit reduziert werden, bleibt aber signifikant vorhanden. Eine Adaption der Höhenlage $h_0$ des Einlaufs in Stufen ist für ein zentrisches Einlaufbauwerk aber sehr kritisch zu sehen, da die Adaption bei Anfahren und Außerbetriebnahme einer Stufe stark diskontinuierliche Strömungsgeschwindigkeiten und somit besonders große destabilisierende Impulsstöße auf eine physikalisch ohnehin instabile Quellenströmung aufprägt. Dies führt potentiell zu deutlich schlechteren Ablaufqualitäten.

Das Phänomen, dass die Strahleinmischung mit größer werdendem $b_i$ und somit kleiner werdender Energie $\Delta E_U$ sinkt, macht sich zum Beispiel das in der Offenlegungsschrift DE 198 30 311 A1 beschriebene Verfahren zu Nutze, in dem es den Einlauf peripher, also am Rand des Absetzbeckens, in Sohlnähe anordnet. Eine Minimierung von $\Delta E_{pk}$ wird hier nicht berücksichtigt und $E_b$ durch sohlnahe Einleitung sogar maximiert. Der störende Effekt der Einmischung bleibt somit auch hier in hohem Maße erhalten.

Das in dem Dokument JP 2000 325706 A beschriebene Absetzbecken besitzt einen zentral angeordneten Einlauf mit einer Einrichtung zur stufenlosen Anpassung der Höhenlage des Einlaufs. Dabei erfolgt der Zulauf in das Absetzbecken im wesentlichen in vertikaler Richtung.

Angesichts der beschriebenen Nachteile im Stand der Technik stellt sich das technische Problem, ein optimiertes Absetzbecken vorzuschlagen, das sich durch höhere Abtrennleistung, bessere Ablaufwerke, geringere interne Belastung und störungsarmen Betrieb auszeichnet.

Die vorliegende Erfindung beruht auf der Erkenntnis, dass sowohl destabilisierende Impulsstöße als auch die Einlaufenergie

$$E_{tot} = (E_{pk})_{min} + E_b + \Delta E_{pk} + \Delta E_U$$

am Einlauf weitest möglich verringert bzw. auf das technisch mögliche Minimum reduziert werden muss. Damit wird auch die von der Einlaufenergie abhängige Strahleinmischung bei höchst möglicher Stabilität der Strömung reduziert.

Gelöst wird die Aufgabe bei einem Absetzbecken mit zentral angeordnetem Einlaufbauwerk mit wenigstens einer Suspensionszuleitung und mindestens einem höhenveränderlichen Einlauf, der im Bereich des Trennspiegels in das Absetzbecken mündet, und mit einer Einrichtung zur stufenlosen Anpassung der relativen Höhenlage $h_0$ des Einlaufs an die jeweilige Höhenlage $h_S$ des Trennspiegels, erfindungsgemäß dadurch, dass die höhe in des Einlaufquerschnitts durch einen unteren Rand und einen oberen Rand des Einlauffläche definiert ist und zur Anpassung der Höhenlage $h_o$ des Einlaufs die Höhenlagen beider Ränderveränderbar sind.

Gelöst wird die Aufgabe auch durch ein Absetzbecken, bei dem gemäß Patentanspruch 7 der Einlauf am Rande des Absetzbeckens angeordnet und die relative Höhenlage $h_0$ des Einlaufs an die jeweilige Höhenlage $h_S$ des Trennspiegels anpassbar ist.

Erfolgt bei einem zentrischen Einlaufbauwerk die Adaption der relativen Höhenlage $h_0$ des Einlaufs an die jeweilige Höhenlage $h_S$ des Trennspiegels stufenlos, so wird hierdurch die kritische destabilisierende Impulsänderung minimiert. Das Absetzbecken kann folglich kleiner gebaut oder, bei vorgegebener Größe, höher belastet werden.

Vorteilhafte Ausgestaltungen der Erfindung ergeben sich aus den Unteransprüchen.

Lässt sich nicht nur die relative Höhenlage $h_0$ des Einlaufs, sondern zusätzlich auch die Höhe $h_i$ des Einlaufquerschnitts variieren, so lässt sich je nach Volumenstrom und/oder Dichte der eingeleiteten Suspenion eine destabilisierende Impulsänderung im Bereich des Einlaufs noch wirksamer verhindern.

Eine besonders vorteilhafte Ausführung eines höhenveränderlichen peripheren Einlaufs ergibt sich, wenn man die Wand des Beckens in mindestens zwei Höhen ganz oder teilweise umlaufend schlitzförmig durchbricht und mittels Verschlussorganen den Einlauf durch die Schlitze in Stufen höhenverschieblich kontrolliert.

Eine weitere vorteilhafte Ausführung eines höhenveränderlichen peripheren Einlaufs ergibt sich, wenn man an der Peripherie eines Beckens mindestens zwei, ganz oder teilweise umlaufende Rohre übereinander anordnet, deren Beschickung steuer- oder regelungstechnisch ganz oder teilweise auf einzelne Rohre aufgeteilt werden kann. Die Rohre müssen spül- oder molchbar sein, damit die Suspension in temporär nicht beaufschlagten Rohren vollständig ausgetragen werden kann. Sonst ergeben sich zum Beispiel bei biochemisch aktiven Suspensionen, wie sie in Nachklärbecken einströmen, bei langem Aufenthalt im nicht aktiven Rohr nachteilhafte Zersetzungsvorgänge.

Die für die Flockenfilterwirkung positive Strahleinmischung aus Bereichen höherer Dichte kann man fördern, indem man durch ein Strömungsleitschild über dem Einlauf dafür sorgt, dass sich eine Einmischung in den zulaufenden Suspensionsstrom ausschließlich aus dem unteren Bereich des Absetzbeckens mit Suspension höherer Dichte versorgen kann. Durch eine Neigung des Strömungsleitschildes kann der Winkel $\Phi$ begrenzt werden, mit dem sich die Dichteströmung nach oben bewegt. So wird auch die Einmischung kontrolliert.

Führt man ein oder mehrere Strömungsleitschilde so aus, dass deren Winkel $\Phi$ im Betrieb variiert werden kann, ist es möglich, auch für mehrere statische Einlaufhöhen die Strahleinmischung variabel zu kontrollieren und den einlaufenden Dichtestrom kontrolliert an den Trennspiegel zu leiten.

Da die geometrische Form der Oberfläche keinen qualitativen Einfluss auf die für die Erfindung relevanten physikalischen Phänomene hat, ist es möglich, dass die Oberfläche des Absetzbeckens in runder oder rechteckiger Form ausgebildet ist. Auch Sonderformen der Beckenoberfläche sind möglich.

Da die Form des Abzugs der leichteren Phase keinen qualitativen Einfluss auf die für die Erfindung relevanten physikalischen Phänomene hat, kann der Abzug der leichteren Phase in Form von Überfallschneiden, offenen oder getauchten Ablaufrohren oder anderweitig erfolgen.

Da auch die Form des Abzugs der schwereren Phase keinen qualitativen Einfluss auf die für die Erfindung relevanten physikalischen Phänomene hat, kann der Abzug der schwereren Phase gravitativ mit oder ohne Unterstützung von Räumern, mit geneigter oder horizontaler Sohle des Absetzbeckens, durch Absaugen oder anderweitig erfolgen.

Aus konstruktiven und geometrischen Gründen ist es möglich, dass der Trennspiegel bei sehr geringer Belastung des Absetzbeckens für eine Einlaufhöhe am untersten einstellbaren Punkt zeitweise unter die Einlauffläche abfällt.

Ausführungsbeispiele der Erfindung werden nachstehend unter Bezugnahme auf die beigefügten Zeichnungen näher beschrieben. Es zeigen:

Fig. 1a - 1c    Ein rundes Absetzbecken mit zentralem Einlaufbauwerk, höhenverschieblichem Zulaufrohr und einstellbarer Umlenkplatte;

Fig. 2a - 2c    ein rundes Absetzbecken mit zentralem Einlaufbauwerk, Eintragsrohr und teleskopierbarem Rohrring;

Alle Abbildungen zeigen Absetzbecken in stark vereinfachten Vertikalschnitten. Gleiche Elemente sind jeweils mit denselben Bezugszeichen versehen.

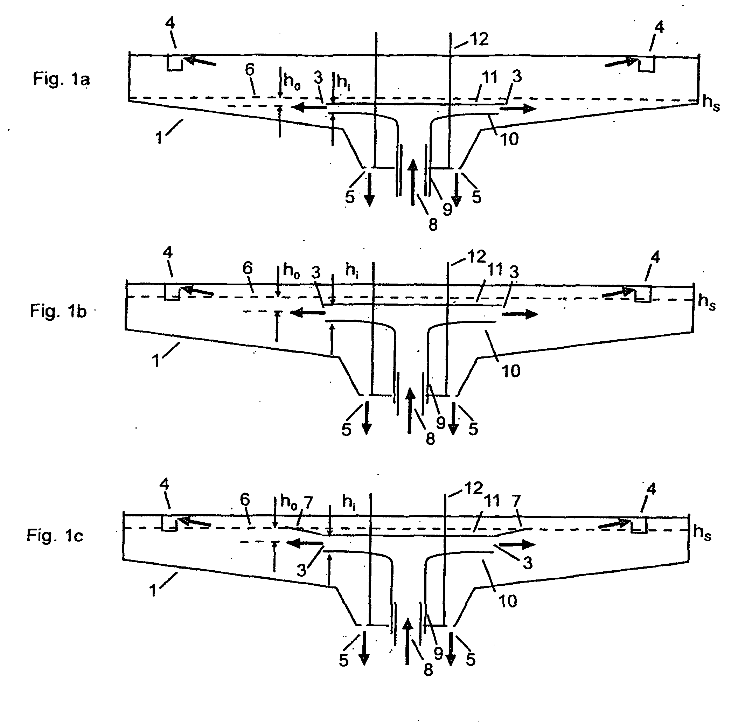

Das in den Figuren 1a bis 1c beispielhaft dargestellte runde Absetzbecken hat ein zentrisches Einlaufbauwerk mit einem Einlauf 3 für eine Suspension aus Klärschlamm und Wasser. Der schwerere Schlamm setzt sich nach unten ab, während im oberen Teil des Absetzbeckens 1 klares Wasser steht. Das geklärte Wasser wird von der Oberfläche durch einen Klarwasserabzug 4 abgezogen. Der nach unten abgesetzte Schlamm wird an der tiefsten Stelle des Absetzbeckens 1 durch einen Schlammabzug 5 abgezogen. Zwischen der schweren Phase, also dem Schlamm, und der leichten Phase, also dem Klarwasser, bildet sich ein Trennspiegel 6. Ein oberhalb des Einlaufs 3 angebrachtes Strömungsleitschild 7 verhindert Einmischung von oben.

Die relative Höhenlage $h_0$ des Einlaufs 3 ist definiert durch den Abstand zum Trennspiegel 6. Der Querschnitt des Einlaufs 3 hat die Höhe $h_i$.

Eine Suspensionszuleitung 8 durchsetzt den Boden des Absetzbeckens 1 und geht in ein vertikales Zulaufrohr 9 über. Das obere Ende des Zulaufrohrs 9 geht stetig in eine horizontale Einlauffläche 10 über. Das Zulaufrohr 9 ist teleskopierbar ausgebildet, wodurch sich die Höhenlage $h_0$ des Einlaufs relativ zum Trennspiegel 6 stufenlos verändern lässt. Über der Einlauffläche 10 ist eine Umlenkplatte 11 parallel und im Abstand angeordnet. Mittels Hubstangen 12 lässt sich die Umlenkplatte 11 in vertikaler Richtung nach oben oder unten verschieben. Dadurch kann die Höhe $h_A$ des Einlaufquerschnitts in Abhängigkeit des Volumenstroms und/oder der Dichte der eingeleiteten Suspension verändert werden.

In dem in Figur 1a dargestellten Betriebszustand liegt der Trennspiegel 6 relativ tief. Entsprechend tief ist die Höhenlage $h_0$ des Einlaufs 3 eingestellt. Ferner ist in diesem Betriebszustand der Einlaufquerschnitt dadurch relativ klein gehalten, dass der Abstand zwischen der Einlauffläche 10 und der Umlenkplatte 11 relativ klein ist, wodurch sich eine vergleichsweise kleine Höhe $h_i$ des Einlaufquerschnitts ergibt. In Figur 1b liegt hingegen der Trennspiegel 6 wesentlich höher. Die Hö-

henlage $h_0$ des Einlaufs 3 wurde entsprechend nach oben gefahren, so dass der Einlauf 3 wiederum knapp unterhalb der Höhenlage $h_S$ des Trennspiegels liegt. Auch die Höhe $h_i$ des Einlaufquerschnitts wurde erhöht, indem der Abstand zwischen Einlauffläche 10 und Umlenkplatte 11 vergrößert ist.

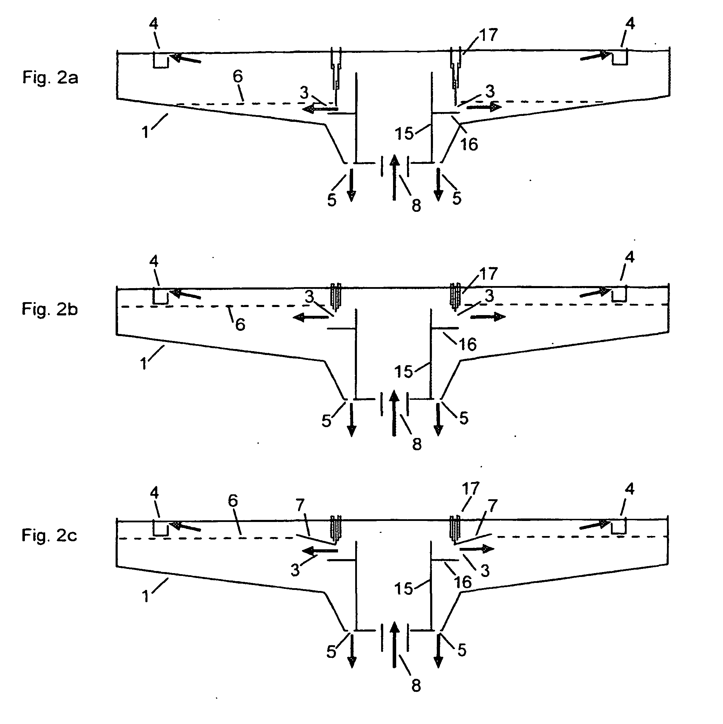

Das in den Figuren 2a bis 2c dargestellte runde Absetzbecken hat ein zentral angeordnetes Einlaufbauwerk, umfassend eine Suspensionszuleitung 8 und einen Einlauf 3 mit stufenlos veränderlicher Höhenlage. Die Suspensionszuleitung 8 mündet in ein Eintragsrohr 15 vergleichsweise großen Umfangs. An der Außenwand des Eintragsrohrs 15 ist eine konzentrische Ringplatte 16 höhenverschieblich angeordnet. Oberhalb der Ringplatte 16 ist ein Rohrring 17 angeordnet, der das Eintragsrohr 15 im Bereich seines oberen Randes konzentrisch umgibt. Der Rohrring 17 ist teleskopierbar ausgeführt. Der Abstand zwischen dem unteren Rand des Rohrrings 17 und der Oberseite der Ringplatte 16 definiert den Einlaufquerschnitt. Sowohl die Höhenlage des Einlaufs in Bezug auf den Trennspiegel 6 wie auch die Höhe des Einlaufquerschnitts sind stufenlos verstellbar.

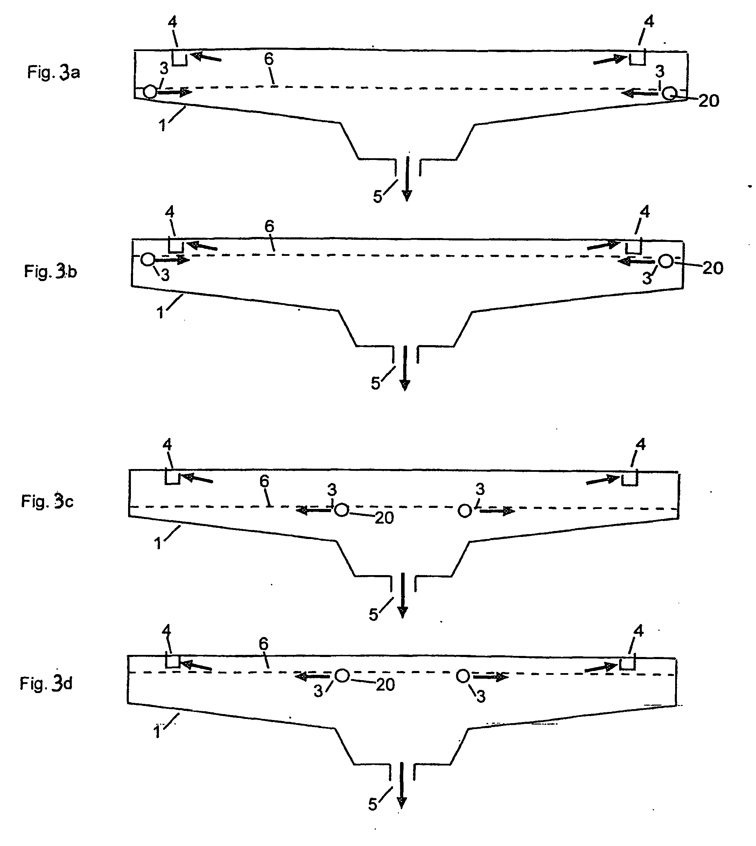

Bei dem runden Absetzbecken 1 gemäß den Figuren 3a und 3b, welches nicht unter die Ausprüche fällt, ist die Suspensionzuleitung mit einer horizontalen ringförmigen Einlaufleitung 20 verbunden, deren Wandung (nicht dargestellte) Auslauföffnungen hat. Die Einlaufleitung 20 verläuft entlang des Randes des Absetzbeckens 1 und ist in der Höhe verschieblich.

Bei den erfindungsgemäßen Ausführungen nach den Figuren 3c und 3d verläuft die Einlaufleitung 20 konzentrisch um die Mitte des Absetzbeckens 1.

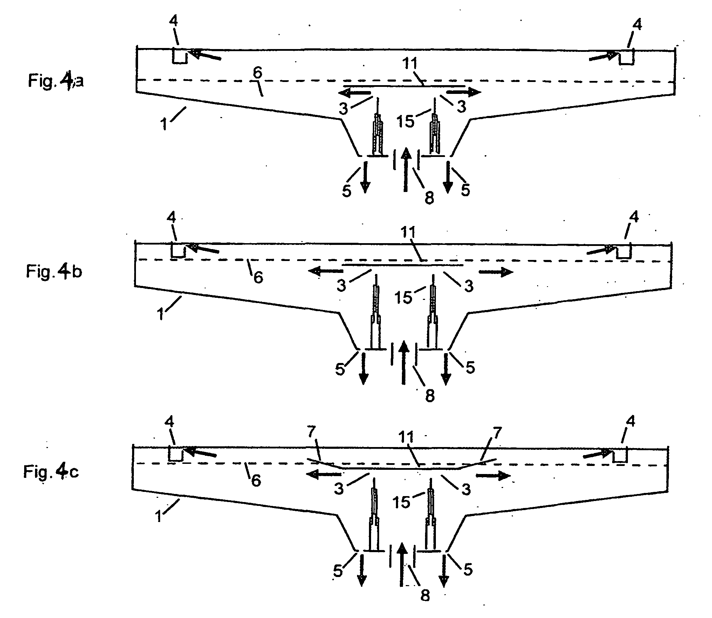

Bei der Ausführungsform gemäß den Figuren 4a, 4b und 4c mündet die Suspensionszuleitung 8 in ein zentrales Eintragsrohr 15, das teleskopierbar ausgeführt ist. Über dem freien oberen Ende des Eintragsrohrs 15 ist eine horizontale Umlenkplatte 11 höhenverschieblich angeordnet. Der Abstand zwischen dem oberen Rand des Eintragsrohrs 15 und der Unterseite der Umlenkplatte 11 definiert die variable Höhe des Querschnitts des Einlaufs 3.

Zusammenstellung der Bezugszeichen

1    Rundes Absetzbecken
2    Rechteckiges Absetzbecken
3    Einlauf
4    Klarwasserabzug
5    Schlammabzug
6    Trennspiegel
7    Strömungsleitschild

8    Suspensionszuleitung
9    Zulaufrohr
10    Einlauffläche

11    Umlenkplatte
12    Hubstange
13    Zulaufbecken

15    Eintragsrohr
16    Ringplatte
17    Rohrring

## Patentansprüche

1.    Absetzbecken für eine zweiphasige Suspension, insbesondere für Klärschlamm, in dem sich durch gravitative Trennung die schwere Phase nach unten absetzt und sich ein Trennspiegel (6) zwischen der schweren und der leichten Phase bildet, umfassend ein zentral angeordnetes Einlaufbauwerk mit wenigstens einer Suspensionszuleitung (8) und mindestens einem höhenveränderlichen Einlauf (3), der im Bereich des Trennspiegels (6) in das Absetzbecken (1, 2) mündet, und mit einer Einrichtung zur stufenlosen Anpassung der relativen Höhenlage $h_0$ des Einlaufs (3) an die jeweilige Höhenlage $h_S$ des Trennspiegels (6), **gekennzeichnet dadurch, dass** die Höhe $h_i$ des Einlaufquerschnitts durch einen unteren Rand und einen oberen Rand der Einlauffläche definiert ist und zur Anpassung der Höhenlage $h_0$ des Einlaufs (3) die Höhenlagen beider Ränder veränderbar sind.

2.    Absetzbecken nach Anspruch 1, **gekennzeichnet durch** eine Einrichtung zum Verstellen der Höhe $h_i$ des Einlaufquerschnitts in Abhängigkeit des Volumenstroms und/oder der Dichte der eingeleiteten Suspension.

3.    Absetzbecken nach Anspruch 2, **dadurch gekennzeichnet, dass**

-    die Suspensionszuleitung (8) ein im wesentlichen vertikales Zulaufrohr (9) umfasst, das den Boden des Absetzbeckens (1) durchsetzt;

-    das Zulaufrohr (9) höhenverschieblich oder teleskopierbar ausgebildet ist;

-    das obere Ende des Zulaufrohrs (9) in eine im wesentlichen horizontale Einlauffläche (10) übergeht;

-    über der Einlauffläche (10) eine Umlenkplatte (11) parallel und in einstellbarem Abstand angeordnet ist;

-    der Abstand zwischen der Einlauffläche (10) und der Umlenkplatte (11) die Höhe $h_i$ des Einlaufquerschnitts definiert.

**4.** Absetzbecken nach Anspruch 2, **dadurch gekennzeichnet, dass**

- die Suspensionszuleitung (8) in ein Eintragsrohr (15) mündet;

- an der Außenwand des Eintragsrohrs (15) eine konzentrische Ringplatte (16) höhenverschieblich angeordnet ist;

- oberhalb der Ringplatte (16) ein Rohrring (17) angeordnet ist, der das Eintragsrohr (15) zumindest im Bereich seines oberen Randes konzentrisch umgibt;

- der Rohrring (17) in der Höhe verschieblich oder teleskopierbar ausgeführt ist;

- der Abstand zwischen dem unteren Rand des Rohrrings (17) und der Oberseite der Ringplatte (16) die Höhe $h_i$ des Einlaufquerschnitts definiert.

**5.** Absetzbecken nach Anspruch 2, **dadurch gekennzeichnet, dass**

- die Suspensionszuleitung (8) in ein Eintragsrohr (15) mündet;

- das Eintragsrohr (15) in der Höhe verschieblich oder teleskopierbar ausgeführt ist;

- über dem freien Ende des Eintragsrohrs (15) eine im wesentlichen horizontale Umlenkplatte (11) höhenverschieblich angeordnet ist;

- der Abstand zwischen dem oberen Rand des Eintragsrohrs (15) und der Unterseite der Umlenkplatte (11) die variable Höhe $h_i$ des Einlaufquerschnitts definiert.

**6.** Absetzbecken nach Anspruch 1, **dadurch gekennzeichnet, dass**

- die Suspensionszuleitung mit wenigstens einer höhenverschieblichen Einlaufleitung (20) verbunden ist, deren Wandung Auslauföffnungen hat;

- die Einlaufleitung (20) konzentrisch um die Mitte des Absetzbeckens (1) verläuft.

**7.** Absetzbecken nach einem der Ansprüche 1 bis 6, **dadurch gekennzeichnet , dass** über dem Einlauf wenigstens ein Strömungsleitschild (7) angeordnet ist.

**8.** Absetzbecken nach Anspruch 6, **dadurch gekenn-**

zeichnet, dass sich das Strömungsleitschild (7) unter einem spitzen Neigungswinkel nach oben in Richtung des Trennspiegels (6) erstreckt.

**9.** Absetzbecken nach Anspruch 8, **dadurch gekennzeichnet, dass** der Neigungswinkel des Strömungsleitschildes (7) einstellbar ist.

**10.** Absetzbecken nach Anspruch 9, **gekennzeichnet durch** eine Einrichtung zur Steuerung des Neigungswinkels des Strömungsleitschilds (7) in Abhängigkeit der relativen Höhenlage $h_0$ des Einlaufs (3).

**Claims**

**1.** Sedimentation basin for a two-phase suspension, particularly for sewage sludge, in which the heavy phase settles downwards by gravitational separation and a separation level (6) is formed between the heavy phase and the light phase, comprising a centrally disposed inlet construction with at least one suspension supply line (8) and at least one inlet (3) which is adjustable in height and opens into the sedimentation basin (1, 2) in the region of the separation level (6) and with an arrangement for an continuous adaptation of the relative height $h_0$ of the inlet to the respective height $h_s$ of the separation level (6) **characterised in that** the height $h_i$ of the inlet cross-section is defined through a lower edge and an upper edge of the inlet area and **in that** the elevations of both edges are changeable for the adaptation of the height $h_0$ of the inlet.

**2.** Sedimentation basin as claimed in Claim 1, **characterised by** an arrangement for adjusting the height $h_i$ of the inlet cross-section as a function of the volume flow and/or the density of the introduced suspension.

**3.** Sedimentation basin as claimed in Claim 2, **characterised in that**

- the suspension supply line (8) comprises a substantially vertical inlet pipe (9) which passes through the base of the sedimentation basin (1);

- the inlet pipe (9) is constructed so as to be adjustable in height or telescopic;

- the upper end of the inlet pipe (9) merges into a substantially horizontal inlet surface (10);

- a deflector plate (11) is disposed above the inlet surface (10), parallel thereto and at an adjustable distance therefrom;

- the distance between the inlet surface (10) and the deflector (11) defines the height $h_i$ of the inlet cross-section.

4. Sedimentation basin as claimed in Claim 2, **characterised in that**

   - the suspension supply line (8) opens into an inlet pipe (15);

   - a concentric annular plate (16) is disposed so as to be adjustable in height on the outer wall of the inlet pipe (15);

   - above the annular plate (16) there is disposed a pipe ring (17) which surrounds the inlet pipe (15) concentrically at least in the region of its upper edge;

   - the pipe ring (17) is adjustable in height or of telescopic construction;

   - the distance between the lower edge of the pipe ring (17) and the upper face of the annular plate (16) defines the height $h_i$ of the inlet cross-section.

5. Sedimentation basin as claimed in Claim 2, **characterised in that**

   - the suspension supply line (8) opens into an inlet pipe (15);

   - the inlet pipe (15) is adjustable in height or of telescopic construction;

   - a substantially horizontal deflector plate (11) is disposed so as to be adjustable in height above the free end of the inlet pipe (15);

   - the distance between the upper edge of the inlet pipe (15) and the underside of the deflector plate (11) defines the variable height $h_i$ of the inlet cross-section.

6. Sedimentation basin as claimed in Claim 1, **characterised in that**

   - the suspension supply line is connected to at least one inlet conduit (20) which is adjustable in height, the wall of which has outlet openings;
   - the inlet pipe (20) extends concentrically around the centre of the sedimentation basin (1).

7. Sedimentation basin as claimed in any one of Claims 1 to 6, **characterised in that** at least one flow deflector (7) is disposed above the inlet.

8. Sedimentation basin as claimed in Claim 7, **characterised in that** the flow deflector (7) extends at an acute angle of inclination upwards in the direction of the separation level (6).

9. Sedimentation basin as claimed in Claim 8, **characterised in that** the angle of inclination of the flow deflector (7) is adjustable.

10. Sedimentation basin as claimed in Claim 9, **characterised by** an arrangement for controlling the angle of inclination of the flow deflector (7) as a function of the relative height $h_0$ of the inlet (3).

**Revendications**

1. Bassin de sédimentation pour une suspension à deux phases, en particulier pour boues résiduaires, dans lequel par séparation par gravité, la phase lourde se dépose vers le bas et il se crée un niveau de séparation (6) entre la phase lourde et la phase légère, comprenant un ouvrage d'arrivée présentant au moins une conduite (8) d'amenée de suspension et au moins une arrivée (3) variable en hauteur, qui débouche dans le bassin de sédimentation (1, 2) dans la zone du niveau de séparation (6) et présentant un dispositif permettant l'adaptation de manière continue, de la position en hauteur relative $h_0$ de l'arrivée (3) à la position en hauteur $h_s$ particulière du niveau de séparation (6), **caractérisé en ce que** la hauteur $h_i$ de la section transversale d'arrivée est définie par un bord inférieur et un bord supérieur de la surface d'arrivée et que, pour l'adaptation de la position en hauteur $h_0$ de l'arrivée (3), les positions en hauteur des deux bords peuvent être modifiées.

2. Bassin de sédimentation selon la revendication 1, **caractérisé par** un dispositif de réglage de la hauteur $h_i$ de la section transversale d'arrivée en fonction du flux volumique et/ou de la densité de la suspension déversée.

3. Bassin de sédimentation selon la revendication 2, **caractérisé en ce que**

   - la conduite (8) d'amenée de suspension comprend un tube d'arrivée (9) essentiellement vertical, qui traverse le fond du bassin de sédimentation (1) ;
   - le tube d'arrivée (9) est réalisé de manière déplaçable en hauteur ou télescopique ;
   - à l'extrémité supérieure du tube d'arrivée (9) fait suite une surface d'arrivée (10) essentiellement horizontale ;
   - au-dessus de la surface d'arrivée (10) une plaque de déviation (11) est disposée de manière parallèle et à une distance réglable ;

- la distance entre la surface d'arrivée (10) et la plaque de déviation (11) définit la hauteur $h_i$ de la section transversale d'arrivée.

4. Bassin de sédimentation selon la revendication 2, **caractérisé en ce que**

- la conduite (8) d'amenée de suspension débouche dans un tube de déversement (15) ;
- sur la paroi extérieure du tube de déversement (15), une plaque annulaire (16) concentrique est disposée de manière déplaçable en hauteur ;
- au-dessus de la plaque annulaire (16) est disposé un anneau tubulaire (17) qui entoure le tube de déversement (15) de manière concentrique, au moins dans la zone de son bord supérieur ;
- l'anneau tubulaire (17) est réalisé de manière déplaçable en hauteur ou télescopique ;
- la distance entre le bord inférieur de l'anneau tubulaire (17) et le côté supérieur de la plaque annulaire (16) définit la hauteur $h_i$ de la section transversale d'arrivée.

5. Bassin de sédimentation selon la revendication 2, **caractérisé en ce que**

- la conduite (8) d'amenée de suspension débouche dans un tube de déversement (15) ;
- le tube de déversement (15) est réalisé de manière déplaçable en hauteur ou télescopique ;
- au-dessus de l'extrémité libre du tube de déversement (15), une plaque de déviation (11) essentiellement horizontale est disposée de manière réglable en hauteur ;
- la distance entre le bord supérieur du tube de déversement (15) et le côté inférieur de la plaque de déviation (11) définit la hauteur variable $h_i$ de la section transversale d'arrivée.

6. Bassin de sédimentation selon la revendication 1, **caractérisé en ce que**

- la conduite (8) d'amenée de suspension est reliée à au moins une conduite d'arrivée (20) réglable en hauteur, dont la paroi comporte des orifices d'évacuation ;
- la conduite d'arrivée (20) s'étend de manière concentrique autour du centre du bassin de sédimentation (1).

7. Bassin de sédimentation selon l'une des revendications 1 à 6, **caractérisé en ce qu'**au-dessus de l'arrivée est disposée au moins une plaque de guidage de flux (7).

8. Bassin de sédimentation selon la revendication 7 **caractérisé en ce que** la plaque de guidage de flux (7) s'étend vers le haut, dans la direction du niveau de séparation (6), en formant un angle d'inclinaison aigu.

9. Bassin de sédimentation selon la revendication 8, **caractérisé en ce que** l'angle d'inclinaison de la plaque de guidage de flux (7) est réglable.

10. Bassin de sédimentation selon la revendication 9, **caractérisé par** un dispositif pour commander l'angle d'inclinaison de la plaque de guidage de flux (7) en fonction de la hauteur $h_0$ relative de l'arrivée (3).

Fig. 1a

Fig. 1b

Fig. 1c

Fig. 2a

Fig. 2b

Fig. 2c

Fig. 3a

Fig. 3b

Fig. 3c

Fig. 3d

Fig. 4 a

Fig. 4 b

Fig. 4 c